# EUROPÄISCHE PATENTANMELDUNG

(11) **EP 1 407 648 A1**
(43) Veröffentlichungstag der Anmeldung: **14.04.2004**
(21) Anmeldenummer: 02022741.9
(22) Anmeldetag: 11.10.2002
(51) Int. Cl.: A01B 33/10, A01D 34/535

(54) **Arbeitsgerät**

(71) Anmelder: Müthing GmbH & Co. KG, 59955 Winterberg-Silbach (DE); Schröder, Martin, 48346 Ostbevern (DE)
(72) Erfinder: Schröder, Martin, Raiffeisenstrasse 29 48346 Ostbevern (DE)
(74) Vertreter: Lempert, Jost, Dipl.-Phys. Dr. rer.nat.

(57) **Zusammenfassung**

Die Erfindung schlägt ein Arbeitsgerät, insbesondere für einen Mulcher, mit einem Werkzeuge tragenden Rotationskörper (2) vor, der zur gattungsmäßigen einfachen und damit preiswerteren Ausgestaltung dadurch gekennzeichnet ist, dass der Rotorkörper aus mindestens zwei miteinander verschraubten Teilen (2.1,2.2) besteht.

## Beschreibung

Die Erfindung betrifft ein Arbeitsgerät mit einem Werkzeuge tragenden Rotorkörper.

Rotoren werden entweder aus Massivmaterial oder aber aus einem einstückigen Rohr gebildet, wobei bei ersterem Halter für Werkzeuge, wie Schlegel, insbesondere Hammerschlegel, sonstige Zerkleinerungswerkzeuge, insbesondere feste, starre Zinken, Finger oder dergleichen, aber auch Besenleisten für Kehrfunktionen, Messer für Vertikutier- oder Fräsarbeiten oder auch Förderzinken, Schneidmesser angeschraubt sein können, während insbesondere beim letzteren die Halter festgeschweißt werden. Derartige Arbeitsgeräte in Form von Rotoren werden insbesondere bei Mulchern eingesetzt. Um auf flachen Haltflächen Werkzeughalter zu schaffen, ist oft eine spanende Bearbeitung nötig. Auf jeden Fall müssen diese Arbeitsgeräte nach Fertigstellung immer ausgewuchtet werden, damit ein Rundlauf gesichert ist. Darüber hinaus ist es aufwendig und schwierig, an derartigen Rotorkörpern drehfest Achswellen vorzusehen, die aufgrund der in der Regel gegebenen Rotationsgeometrie der Rotorkörper ebenfalls durch Verschweißen mit dem Rotorkörper verbunden werden müssen.

Insofern ist die Herstellung bekannter gattungsgemäßer Arbeitsgeräte äußerst aufwendig und damit kostenträchtig.

Der Erfindung liegt daher die Aufgabe zugrunde, ein gattungsgemäßes Arbeitsgerät dahingehend weiterzubilden, dass es einfach ausgebildet ist und fertigungstechnisch in einfacher Weise und damit preiswert hergestellt werden kann.

Zur Lösung der genannten Aufgabe sieht die Erfindung bei einem gattungsgemäßen Arbeitsgerät mit einem Werkzeuge tragenden Rotorkörper vor, dass der Rotorkörper aus mindestens zwei miteinander verschraubten Teilen besteht.

Die Erfindung schlägt also anstatt eines massiven oder rohrförmigen einstückigen Rotorkörpers einen Rotorkörper aus mindestens zwei Teilen vor, die miteinander verschraubt sind. Hierdurch kann der Rotorkörper in einfacher Weise produziert werden. Die Teile können exakt hergestellt werden, so dass ein anschließendes Auswuchten nicht mehr erforderlich ist.

In bevorzugter Ausgestaltung sieht die Erfindung dabei vor, dass der Rotorkörper mehrkantig ausgebildet ist, wobei insbesondere jedes der Teile des Rotorkörpers nach außen abgebogene Längsflansche aufweist, Längsflansche zweier Teile flach aneinander anliegen und die Teile an den Längsflanschen miteinander verbunden sind.

Eine Weiterbildung sieht in den Rotorkörper eingesetzte Aufnahmen für zumindest eine Rotorwelle vor, wobei insbesondere die Aufnahmen durch in Ausnehmungen des Rotorkörpers eingreifende Ansätze dreh- und axialfest am Rotorkörper festgelegt sind und mindestens eine Rotorwelle mittels Spannbuchsen drehfest mit dem Rotorkörper verbunden ist.

Eine Weiterbildung des erfindungsgemäßen Arbeitsgeräts sieht darüber hinaus eine den gesamten Rotorkörper durchragende Rotorwelle vor, wobei insbesondere mindestens eine im Rotorkörper angeordnete Stützscheibe die Rotorachse stützt. Alternativ können auch zwei kurze, sich jeweils nur ein Stück in den Rotorkörper erstreckende Achsen, die durch zwei mit axialem Abstand zueinander angeordnete Stützpunkte abgestützt sind, stützen.

Die Festlegung der Werkzeuge, wie Schneidemesser, Hammerschlegel oder dergleichen, am Rotorkörper erfolgt in bevorzugter erfindungsgemäßer Ausgestaltung durch Werkzeughalter, wobei vorzugsweise die Halter der Werkzeuge mittels Schrauben am Rotorkörper gehalten sind, und dabei insbesondere einem außenseitig des Rotorkörpers angeordneten Halter innenseitig des Rotorkörpers eine Gegenplatte zugeordnet ist und Halter und Gegenplatte mit Bohrungen im Rotorkörper durchragende Schrauben miteinander verbunden sind. Alternativ können die Halter auch am Rotorkörper festgeschweißt sein. Die Halter können dabei entweder U-förmig ausgebildet sein oder L-förmig, wobei im letzteren Fall ein Werkzeug von zwei einander zugeordneten Haltern gehalten wird.

Ein weiterer Vorteil der Erfindung liegt darin, dass die Werkzeuge in vollständig geschraubter Ausführung hergestellt werden können.

Weitere Vorteile und Merkmale der Erfindung ergeben sich aus den Ansprüchen aus der nachfolgenden Beschreibung, in der ein Ausführungsbeispiel der Erfindung unter Bezugnahme auf die Zeichnungen im einzelnen erläutert ist. Dabei zeigt:

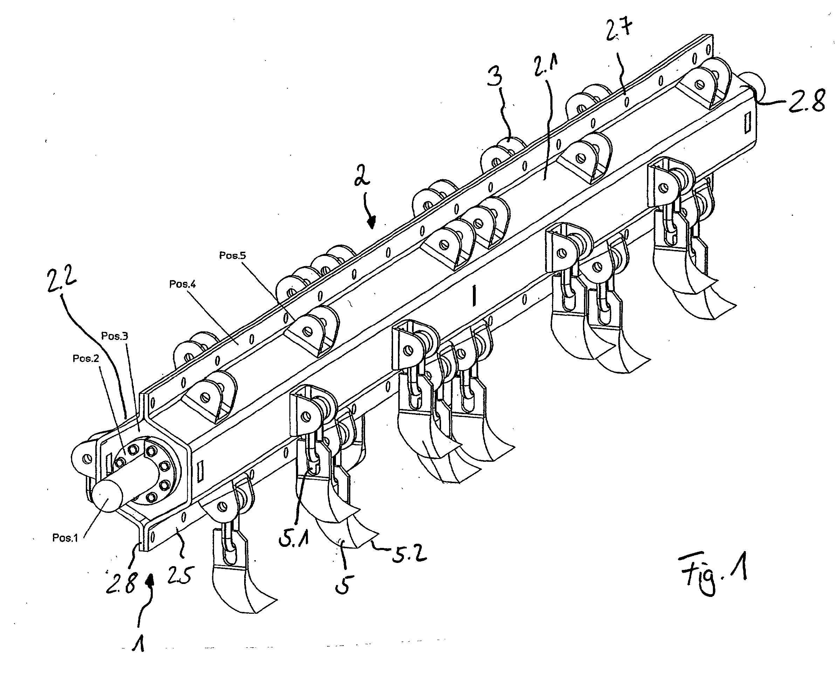

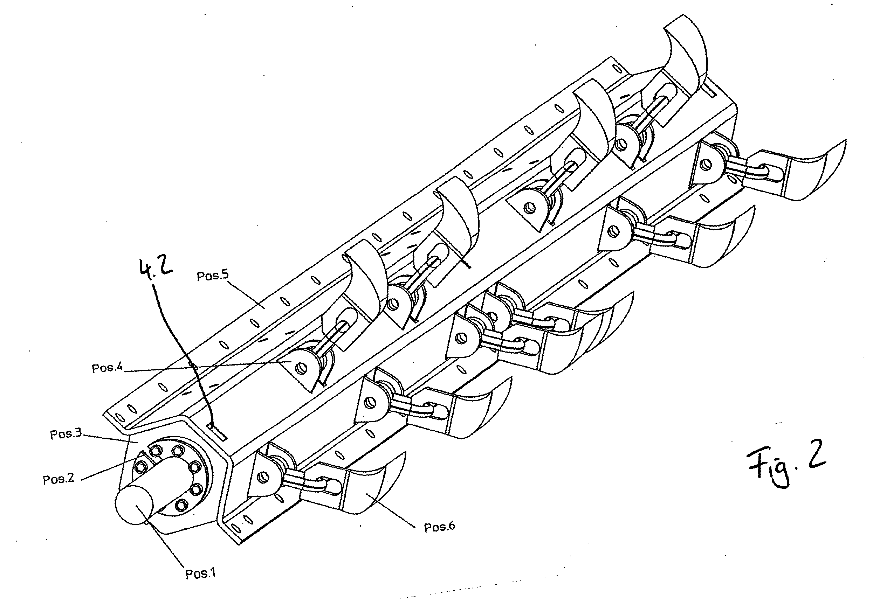

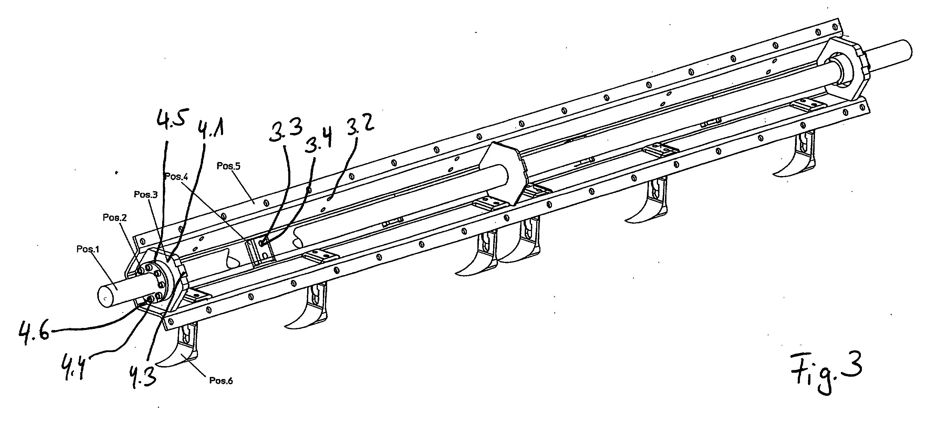

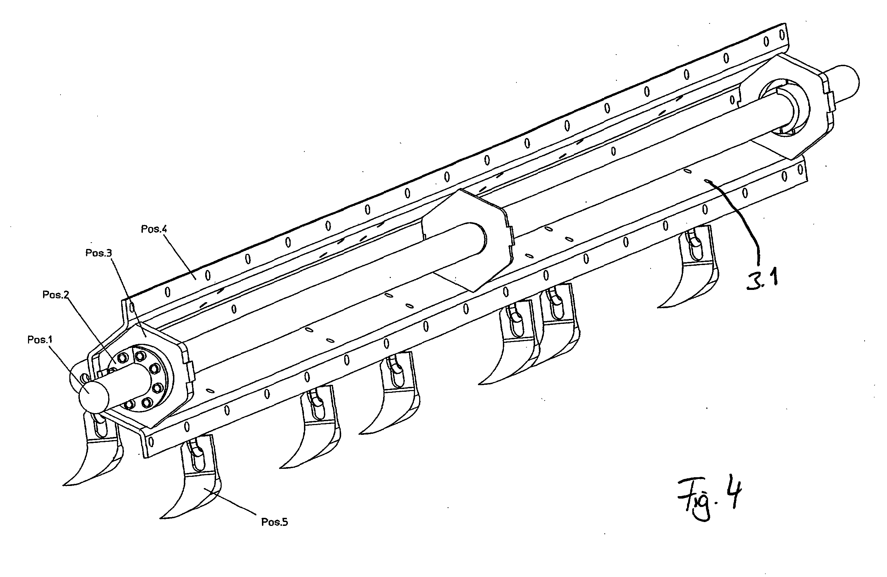

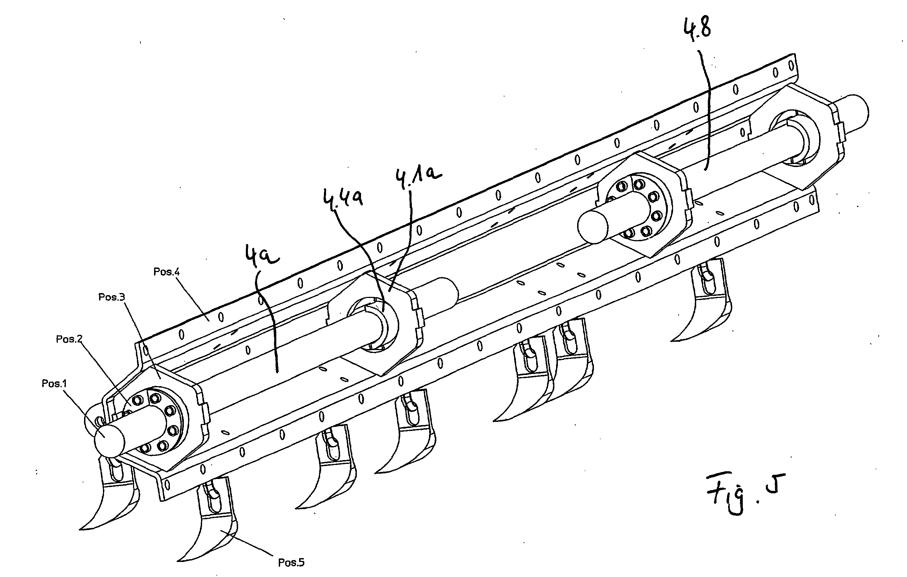

- Fig. 1: eine perspektivische Darstellung eines erfindungsgemäßen Arbeitsgeräts im Ruhezustand;
- Fig. 2: ebenfalls eine perspektivische Darstellung des erfindungsgemäßen Arbeitsgeräts mit durch Fliehkraft aufgrund Drehung nach außen gestreckten Messern;
- Fig. 3: eine Teilansicht des Arbeitsgeräts bei einer Ausgestaltung mit durchgehender Rotorwelle und lose am Rotorkörper aufgehängten Messerhaltern;
- Fig. 4: eine Darstellung ähnlich der der Fig. 3 mit durchgehender Rotorwelle und festgeschweißten Messerhaltern;
- Fig. 5: eine Ausgestaltung des erfindungsgemäßen Arbeitsgeräts mit zwei kurzen Rotorwellen; und
- Fig. 6: eine Darstellung zur Ausgestaltung insbesondere der Fig. 3 mit aus dem Rotorkörper entfernter Rotorwelle.

Das erfindungsgemäße Arbeitsgerät 1 in Form eines Rotors weist in den dargestellten Ausführungsbeispielen einen Rotorkörper 2 auf, der hier aus zwei Teilen, also aus zwei Hälften 2.1, 2.2 besteht. Die Teile 2.1, 2.2 sind über radial nach außen ragende Flanschplatten 2.3, 2.4, 2.5, 2.6, wobei die Platten 2.3 und 2.4 bzw. 2.5 und 2.6 flach aufeinander liegen, mittels Schrauben, für die die Schraublöcher 2.7 angedeutet sind, miteinander verbunden. Der Rotorkörper 2 ist im dargestellten Ausführungsbeispiel im Querschnitt sechseckig ausgebildet.

Alternativ kann der Rotorkörper 2 auch aus mehreren schalenartigen Teilen, beispielsweise aus drei oder vier bestehen. Er kann auch eine andere Zähligkeit statt Sechszähligkeit aufweisen, so kann er beispielsweise als Vier- oder Achtkant ausgebildet sein.

Auf den Flachseiten 2.8 des Rotorkörpers 2 sind Werkzeughalter 3 angebracht. Diese können in an sich bekannter Weise festgeschweißt sein, wie dies bei der Ausgestaltung der Fig. 4 und 5 der Fall ist, wo Schweißpunkte 3.1 angedeutet sind.

Alternativ können sie mittels Verschraubung am Rotorkörper 2 festgelegt sein. Hierzu sind für jeden U-förmigen Werkzeughalter 3 am Rotorkörper 2 Bohrungen 3.2 vorgesehen. Weiterhin ist gegenüberliegend, den Werkzeughaltern 3 zugeordnet, auf der Innenseite des Rotorkörpers eine Halteplatte 3.3 angeordnet. Diese ist mittels durch die Bohrung 3.2 zum Werkzeughalter 3 führenden Schrauben 3.4 befestigt. Derartig wird der Werkzeughalter 3 am Rotorkörper 2 gehalten.

Durch die mehrteilige Ausbildung des Rotorkörpers, beispielsweise mit den Rotorkörperhälften der dargestellten Ausführungsform ergibt eine konstruktiv einfache Möglichkeit zur Halterung von Rotor-Wellen 4 im Rotorkörper 2.

Bei der Ausgestaltung der Fig. 3 befinden sich an den Enden des Rotorkörpers 2 Aufnahmen 4.1 für die Welle 4. Die Außenkontur der Aufnahmen 4.1 ist an die Innenkontur des Rotorkörpers 2 angepasst. Zur Festlegung der Aufnahmen 4.1 sind im Rotorkörper 2 diagonal gegenüberliegend Schlitze 4.2 ausgebildet, in die Vorsprünge 4.3 der Aufnahme ragen. Hierdurch ist eine axial- und drehfeste Festlegung der Aufnahmen 4.1 im Rotorkörper 2 nach Schließen desselben gegeben. Zum Festspannen der Welle 4 sind Spannbuchsen 4.4 vorgesehen. Diese weisen einen radialen Ringteil 4.5 auf, welcher mittels Schrauben, wie Imbusschrauben 4.6 an der Aufnahme 4.1 festlegbar ist. Weiterhin weisen die Spannbuchsen einen konischen Bereich 4.7 auf, der durch eine Bohrung in der Aufnahme 4.1 hindurchtritt. Der konische Bereich ist vorzugsweise geschlitzt ausgebildet. Der konische Bereich 4.7 verjüngt sich zum freien Ende hin. Dieses weist einen Durchmesser derart auf, dass er, in die Öffnung der Aufnahme 1 eingeschoben werden kann. Wird nun die Spannbuchse mittels der Schrauben 4.6 an der Aufnahme 4.1 festgeschraubt und dabei axial gegen diese bewegt, so wird der konische Bereich 4.7 gegen die hindurchgesteckte Welle 4 verspannt und diese damit sicher reibschlüssig in der Aufnahme 4.1 festgelegt, so dass eine drehfeste Verbindung zwischen Welle 4 und Rotorkörper 2 gegeben ist.

Zur Abstützung der Welle 4 ist mittig eine weitere Aufnahme 4.8 vorgesehen, die in gleicher Weise am Rotorkörper 2 festgelegt ist, wie dies für die Aufnahmen 4.1 beschrieben wurde. Hier erfolgt keine Spannung. Die Welle 4 durchtritt eine Bohrung der Aufnahme 4.8 mit geringem Spiel. Hierdurch kann eine lange Welle unterstützt werden.

Der Zusammenbau des erfindungsgemäßen Rotors mit einer durchgehenden Welle 4 entsprechend den Fig. 3, 4 und 6 erfolgten derart, dass die Aufnahmen 4.1, 4.8 mit ihren Zapfen 4.3 in einem Teil 2.2 des Rotorkörpers 2 eingesetzt und damit axial festgelegt werden. Anschließend werden die Welle 4 und die Spannbuchsen 4.4 durch die Aufnahmen bzw. in diese hineingeschoben. Im folgenden kann das Verschrauben der beiden Teile 2.1 und 2.2 des Rotorkörpers 2 erfolgen. Anschließend wird die Buchse 4.4 gegen den Halter 4.1 und damit die Welle 4 fest in diesem verspannt. Die beiden letzten Schritte (Schließen des Rotorkörpers 2, Verspannen der Welle 4) können auch in umgekehrter Reihenfolge ausgeführt werden.

Fig. 5 zeigt eine Ausgestaltung, bei der statt einer durchgehenden langen Welle 4 zwei kurze Wellen 4a, 4b vorgesehen sind. Damit diese in axialer Ausrichtung innerhalb des Rotorkörpers 2 gehalten werden, müssen ihre den Enden des Rotorkörpers 2 abgewandten Enden ebenfalls sicher gelagert sein. Diese geschieht durch weiter im Inneren eingesetzte Aufnahmen 4.1a mit Spannbuchsen 4.4a, die in ihrer Ausgestaltung vollständig den beschriebenen Aufnahmen 4.1 und Spannbuchsen 4.4 entsprechen. Auch der Zusammenbau erfolgt grundsätzlich in der gleichen Weise, wie er unter Bezugnahme auf die Figuren 3 und 4 beschrieben wurde, wobei allerdings nun das Verspannen zumindest der inneren Spannbuchsen 4.4a an den inneren Aufnahmen 4.1a vor dem Schließen des Rotorkörpers 2 zu erfolgen hat.

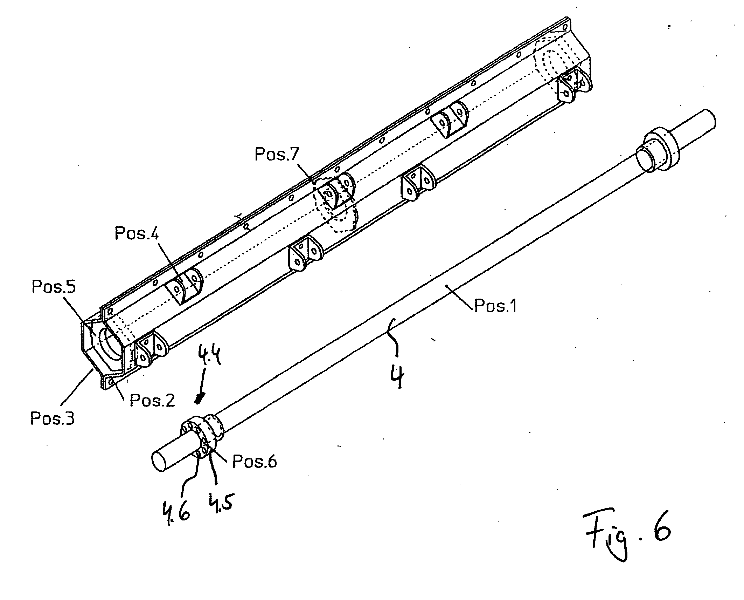

Die Werkzeuge 5 in Form von Messern sind mittels Schäkeln 5.1 an den Werkzeughaltern 3 schwenkbar festgelegt, so dass sie, wie dies in der Fig. 2 dargestellt ist, unter Fliehkraft radial nach außen getrieben werden können, wobei in dieser Position ihre Schneidkante 5.2 im wesentlichen tangential gerichtet ist und ein sauberes Abschneiden von Bewuchs garantiert.

## Patentansprüche

1. Arbeitsgerät mit einem Werkzeuge tragenden Rotorkörper, **dadurch gekennzeichnet, dass** der Rotorkörper (2) aus mindestens zwei miteinander verschraubten Teilen (2.1, 2.2) besteht.

2. Arbeitsgerät nach Anspruch 1, **dadurch gekennzeichnet, dass** der Rotorkörper (2) mehrkantig ausgebildet ist.

3. Arbeitsgerät nach Anspruch 1 oder 2, **dadurch gekennzeichnet, dass** jedes der Teile (2.1, 2.2) des Rotorkörpers nach außen abgebogene Längsflansche (2.3, 2.4, 2.5, 2.6) aufweist, wobei Längsflansche (2.3, 2.4, 2.5, 2.6) zweier Teile (2.1, 2.2) flach aneinander anliegen und die Teile (2.1, 2.2) an den Längsflanschen (2.3, 2.4, 2.5, 2.6) miteinander verbunden sind.

4. Arbeitsgerät nach einem der vorangehenden Ansprüche, **gekennzeichnet durch** in ihn eingesetzte Aufnahmen (4.1) für zumindest eine Rotorwelle (4).

5. Arbeitsgerät nach Anspruch 4, **dadurch gekennzeichnet, dass** die Aufnahmen (4.1) durch in Ausnehmungen (4.2) des Rotorkörpers eingreifende Ansätze (4.3) dreh- und axialfest am Rotorkörper (2) festgelegt sind.

6. Arbeitsgerät nach einem der vorangehenden Ansprüche, **dadurch gekennzeichnet, dass** mindestens eine Rotorwelle (4) mittels Spannbuchsen (4.4) drehfest mit dem Rotorkörper (2) verbunden ist.

7. Arbeitsgerät nach Anspruch 6, **dadurch gekennzeichnet, dass** die zentrale Verspannung an Teilen der Spannbuchsen (4.4) durch axiales Festziehen der Spannbuchsen (4.4) gegen eine mit dem Rotorkörper (2) verbundene Aufnahme (4.1) erfolgt.

8. Arbeitsgerät nach einem der vorangehenden Ansprüche, **gekennzeichnet durch** eine den gesamten Rotorkörper (2) durchragende Rotorwelle (4).

9. Arbeitsgerät nach Anspruch 8, **gekennzeichnet durch** mindestens eine im Rotorkörper (2) angeordnete Stützscheibe (4.8) für die Rotorachse (4).

10. Arbeitsgerät nach einem der Ansprüche 1 bis 7, **gekennzeichnet durch** zwei kurze, sich jeweils nur ein Stück in den Rotorkörper (2) erstreckende Achsen (4a, 4b), die **durch** zwei mit axialem Abstand zueinander angeordnete Stützpunkte abgestützt sind.

11. Arbeitsgerät nach einem der vorangehenden Ansprüche, **gekennzeichnet durch** Halter (3) für Werkzeuge (5), wie Schneidmesser.

12. Arbeitsgerät nach Anspruch 11, **dadurch gekennzeichnet, dass** die Halter (3) mittels Schrauben am Rotorkörper (2) gehalten sind.

13. Arbeitsgerät nach Anspruch 12, **dadurch gekennzeichnet, dass** einem außenseitig des Rotorkörpers (2) angeordneten Werkzeughalter (3) für ein Werkzeug (5) innenseitig des Rotorkörpers (2) eine Gegenplatte (3.3) zugeordnet ist und Werkzeughalter (3) und Gegenplatte (3.3) mit Bohrungen im Rotorkörper (2) durchragende Schrauben (3.4) miteinander verbunden sind.

14. Arbeitsgerät nach einem der Ansprüche 1 bis 10, **gekennzeichnet durch** am Rotorkörper (2) fest verschweißte Messerhalter (3).
